(19) Europäisches Patentamt
European Patent Office
Office européen des brevets

(11) **EP 2 903 830 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(21) Anmeldenummer: **13773617.9**

(22) Anmeldetag: **04.10.2013**

(51) Int Cl.:
*B32B 27/32* (2006.01)     *H01M 2/16* (2006.01)
*C08J 5/18* (2006.01)     *H01M 10/052* (2010.01)

(86) Internationale Anmeldenummer:
**PCT/EP2013/002987**

(87) Internationale Veröffentlichungsnummer:
**WO 2014/056591 (17.04.2014 Gazette 2014/16)**

(54) **MIKROPORÖSE SEPARATOR-FOLIE MIT HOMOGENER POROSITÄT UND ERHÖHTER DURCHSTOSSFESTIGKEIT**

MICROPOROUS SEPARATOR FILM HAVING HOMOGENEOUS POROSITY AND GREATER RESISTANCE TO PUNCTURING

FEUILLE DE SÉPARATION MICROPOREUSE AYANT UNE POROSITÉ HOMOGÈNE ET UNE RÉSISTANCE À LA PERFORATION ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2012 DE 102012019626**
**01.02.2013 DE 102013001700**

(43) Veröffentlichungstag der Anmeldung:
**12.08.2015 Patentblatt 2015/33**

(73) Patentinhaber: **Treofan Germany GmbH & Co. KG**
**66539 Neunkirchen (DE)**

(72) Erfinder:
• **SCHMITZ, Bertram**
**66133 Saarbrücken (DE)**
• **BUSCH, Detlef**
**66740 Saarlouis (DE)**
• **KLEIN, Dominic**
**66450 Bexbach (DE)**

(56) Entgegenhaltungen:
EP-A1- 1 369 221     EP-A1- 2 381 510
EP-A1- 2 444 453     EP-A2- 0 967 671
WO-A1-2010/066389     WO-A1-2010/066390
WO-A1-2010/145770     WO-A1-2011/076805
WO-A1-2011/134626     WO-A2-2011/076375

**Beschreibung**

Die vorliegende Erfindung betrifft eine mikroporöse Folie und ihre Verwendung als Separator mit erhöhter Durchstoßfestigkeit.

Moderne Geräte erfordern eine Energiequelle, wie Batterien oder Akkus, die eine räumlich unabhängige Nutzung ermöglichen. Batterien haben den Nachteil, daß man sie entsorgen muß. Daher werden vermehrt Akkumulatoren (sekundäre Batterien) eingesetzt, die man mit Hilfe von Ladegeräten am Stromnetz immer wieder aufladen kann. Herkömmliche Nickel-Cadmium-Akkus (NiCd-Akkus) können beispielsweise bei sachgerechtem Gebrauch eine Lebensdauer von ca. 1000 Ladezyklen erreichen.

In Hochenergie-oder Hochleistungssystemen werden heute zunehmends Lithium-, Lithiumionen-, Lithium-Polymer-, und Erdalkali-Batterien als Akkumulatoren eingesetzt.

Batterien und Akkumulatoren bestehen immer aus zwei Elektroden, die in eine Elektrolytlösung eintauchen und einem Separator, der Anode und Kathode trennt. Die verschiedenen Akkutypen unterscheiden sich durch das verwendete Elektrodenmaterial, den Elektrolyten und den verwendeten Separator. Ein Batterieseparator hat die Aufgabe Kathode und Anode in Batterien, beziehungsweise negative und positive Elektrode in Akkumulatoren, räumlich zu trennen. Der Separator muss eine Barriere sein, welche die beiden Elektroden elektrisch voneinander isoliert, um interne Kurzschlüsse zu vermeiden. Gleichzeitig muss der Separator jedoch durchlässig für Ionen sein, damit die elektrochemischen Reaktionen in der Zelle ablaufen können.

Ein Batterieseparator muss dünn sein, damit der Innenwiderstand möglichst gering ist und eine hohe Packungsdichte erzielt werden kann. Nur so sind gute Leistungsdaten und hohe Kapazitäten möglich. Zusätzlich ist es erforderlich, daß die Separatoren den Elektrolyten aufsaugen und bei gefüllten Zellen den Gasaustausch gewährleisten. Während früher u. a. Gewebe verwendet wurden, sind heutzutage überwiegend feinporige Materialien, wie Vliesstoffe und Membranen, im Einsatz.

In Lithium-Batterien ist das Auftreten von Kurzschlüssen ein Problem. Bei thermischer Belastung kann es in den Lithium-Ionen-Batterien zu einem Schmelzen des Batterieseparators und damit zu einem Kurzschluss mit verheerenden Folgen kommen. Ähnliche Gefahren bestehen, wenn die Lithium-Batterien mechanisch beschädigt oder durch mangelhafte Elektronik der Ladegeräte überladen werden.

Hochenergiebatterien basierend auf der Lithiumtechnologie werden in Anwendungen eingesetzt, bei denen es darauf ankommt eine möglichst große Menge an elektrischer Energie auf geringstem Raum verfügbar zu haben. Dies ist beispielsweise bei Traktionsbatterien für den Einsatz in Elektrofahrzeugen aber auch in anderen mobilen Anwendungen in denen maximale Energiedichte bei geringem Gewicht gefordert ist, wie z.B. Luft- und Raumfahrt. Augenblicklich werden in Hochenergiebatterien Energiedichten von 350 bis 400 Wh/L bzw. 150 bis 200 Wh/kg erzielt. Diese hohen Energiedichten erreicht man durch den Einsatz von speziellem Elektrodenmaterial (z.B. Li-CoO2) und den sparsameren Einsatz von Gehäusematerialien. So sind in Li-Batterien des Pouch-Zellen-Typs die einzelnen Batterieeinheiten nur noch durch eine Folie voneinander getrennt.

Auf Grund dieser Tatsache sind in diesen Zellen auch höhere Anforderungen an den Separator gestellt, da bei einem internen Kurzschluss und Überhitzung die explosionsartigen Verbrennungsreaktionen auf die benachbarten Zellen übergreifen.

Separatormaterialien für diese Anwendungen müssen folgende Eigenschaften besitzen: Sie müssen möglichst dünn sein, um einen geringen spezifischen Platzbedarf zu gewährleisten und um den Innenwiderstand klein zu halten. Um diese geringen Innenwiderstände zu gewährleisten ist es wichtig, dass der Separator auch eine große Porosität aufweist. Ferner müssen sie leicht sein, damit ein geringes spezifisches Gewicht erreicht wird und sie müssen absolut sicher sein. Dies bedeutet dass im Falle einer Überhitzung oder mechanischen Beschädigung positive und negative Elektrode auf jeden Fall getrennt bleiben müssen um weitere chemische Reaktionen, die zum Brand oder Explosion der Batterien führen, zu verhindern. So ist an die Separatoren insbesondere auch eine hohe Anforderung an deren mechanische Festigkeit gestellt.

Im Stand der Technik sind grundsätzliche poröse Folien bekannt, die aus Polyolefinen, wie z.B. Polypropylen oder Polyethylen, aufgebaut sind. Diese Materialien werden hauptsächlich als Membranen oder Separatoren in Batterien oder Akkumulatoren eingesetzt. Es sind verschiedene Verfahren bekannt nach denen Polyolefinfolien mit hohen Porositäten hergestellt werden können: Füllstoffverfahren; Kaltverstreckung, Extraktionsverfahren und β-Kristallitverfahren. Diese Verfahren unterscheiden sich grundsätzlich durch die verschiedenen Mechanismen, durch welche die Poren erzeugt werden.

Beispielsweise können durch den Zusatz von sehr hohen Füllstoffmengen poröse Folien hergestellt werden. Die Poren entstehen beim Verstrecken durch die Unverträglichkeit der Füllstoffe mit der Polymermatrix. In vielen Anwendungen bringen die großen Füllstoffmengen von bis zu 40 Gew.-% unerwünschte Nebenwirkungen mit sich. Beispielsweise ist die mechanische Festigkeit dieser porösen Folien trotz Verstreckung durch die hohen Füllstoffmengen beeinträchtigt. Außerdem ist die Porengrößenverteilung sehr breit, weshalb diese porösen Folien für Lithium-Ionen Batterien grundsätzlich nicht geeignet sind.

In den sogenannten Extraktionsverfahren werden die Poren im Prinzip durch Herauslösen einer Komponente aus der Polymermatrix durch geeignete Lösemittel erzeugt. Hier haben sich vielfältige Varianten entwickelt, die sich durch Art der Zusatzstoffe und die geeigneten Lösemittel unterscheiden. Es könne sowohl organische als auch anorganische Zusatzstoffe extrahiert werden. Diese Extraktion kann als letzter Verfahrensschritt bei der Herstellung der Folie erfolgen oder mit einer anschließenden Verstreckung kombiniert werden.

Ein älteres aber in der Praxis erfolgreiches Verfahren beruht auf einer Verstreckung der Polymermatrix bei sehr niedrigen Temperaturen (Kaltverstreckung). Hierzu wird die Folie zunächst in üblicher Weise extrudiert und anschließend zur Erhöhung des kristallinen Anteils für einige Stunden getempert. Im nächsten Verfahrensschritt erfolgt die Kalt-Verstreckung in Längsrichtung bei sehr niedrigen Temperaturen, um eine Vielzahl von Fehlstellen in Form kleinster Mikrorisse zu erzeugen. Diese vorgestreckte Folie mit Fehlstellen wird anschließend bei erhöhten Temperaturen mit höheren Faktoren nochmals in die gleiche Richtung verstreckt, wobei die Fehlstellen zu Poren vergrößert werden, die eine netzwerkartige Struktur ausbilden. Diese Folien vereinen hohe Porositäten und gute mechanische Festigkeiten in Richtung ihrer Verstreckung, im Allgemeinen die Längsrichtung. Die mechanische Festigkeit in Querrichtung bleibt dabei jedoch mangelhaft, wodurch die Durchstoßfestigkeit schlecht ist und eine hohe Spleißneigung in Längsrichtung entsteht. Insgesamt ist das Verfahren kostenintensiv.

Ein weiteres bekanntes Verfahren zur Herstellung von porösen Folien basiert auf der Zumischung von β-Nukleierungsmitteln zu Polypropylen. Durch das β-Nukleierungsmittel bildet das Polypropylen beim Abkühlen der Schmelze sogenannte β-Kristallite in hohen Konzentrationen. Bei der anschließenden LängsVerstreckung erfolgt eine Umwandlung der β-Phase in die alpha-Modifikation des Polypropylens. Da sich diese unterschiedlichen Kristallformen in der Dichte unterscheiden, entstehen auch hier zunächst viele mikroskopischen Fehlstellen, die durch die Verstreckung zu Poren aufgerissen werden. Die nach diesem Verfahren hergestellten Folien haben hohe Porositäten und gute mechanische Festigkeiten in Längs-und Querrichtung und eine sehr gute Wirtschaftlichkeit. Diese Folien werden nachstehend β-poröse Folien genannt. Aber auch nach diesem Verfahren hergestellte poröse Folien sind hinsichtlich der Durchlässigkeit und der mechanischen Eigenschaften nicht gut genug, um den hohen Anforderungen beim Einsatz als Separator in Doppelschichtkondensatoren zu genügen. Beispiele für orientierte ein- oder mehrschichtige poröse Folien sind aus EP-A-2381510 bekannt, des Weiteren sind biaxial orientierte ein- oder mehrschichtige poröse Folien aus WO 2010/145770, WO 2010/066390, WO 2010/066389, WO 2011/134626, EP-A-1369221, WO 2011/076805, WO 2011/076375, EP-A-2444453, EP-A-0967671 bekannt.

Verschiedene Verfahren zur Verbesserung der mechanischen Eigenschaften von Separatoren sind heute bekannt:

U.S. Patent 6,921,608 beschreibt die Verbesserung der Durchstoßfestigkeit eines Separators durch laminieren zweier Polyolefin-Separatoren gegeneinander wobei das Separator Laminat bessere mechanische Eigenschaften als ein einschichtiger Separator aus dem gleichen Material hat.

EP-A-0951080 beschreibt die Fertigung eines mechanisch stabilen Separators durch Formen eines dreischichtigen Separators, wobei zwei Außenschichten mit mechanischer Stabilität gegen einen wenig stabilen Separator laminiert werden.

U.S. Patent 5,683,634 beschreibt die Erhöhung der Durchstoßfestigkeit von polyolefinischen Separatoren durch Wahl eines Polymers mit hohem Molekulargewicht.

Die Aufgabe der vorliegenden Erfindung bestand daher darin, eine poröse Folie, bzw. einen Separator für elektrochemische Energiespeicher zur Verfügung zu stellen, der einerseits die Anforderungen an hohe Porosität und geringe Dicke erfüllt und andererseits auch ausgezeichnete mechanische Eigenschaften, insbesondere Durchstoßfestigkeit, besitzt.

Es wurde gefunden, das die Durchstoßfestigkeit von Polyolefin Separatoren deutlich verbessert werden kann, wenn sie infolge/im Rahmen des herkömmlichen Produktionsverfahrens einer zusätzlichen thermischen Behandlung unterzogen werden, wobei eine spezielle Parameter-Kombination eingehalten werden muss.

Die der Erfindung zugrundeliegende Aufgabe wird somit durch eine biaxial orientierte, ein- oder mehrschichtige poröse Folie, gemäß Anspruch 1 gelöst.

Überraschenderweise ist die erfindungsgemäße Folie mit hoher Porosität, sehr guter Durchstoßfestigkeit und hoher Durchlässigkeit hervorragend als Separator in Doppelschichtkondensatoren und Li-Batterien geeignet. Der Gurley Wert der erfindungsgemäße Folie liegt im Allgemeinen in einem Bereich von 20 bis ≤800s; vorzugsweise 50 bis 800s, insbesondere 100 bis 650s. Der E-Modul (Elastizitätsmodul) der erfindungsgemäßen Folie beträgt in Längsrichtung 300 bis 3500 N/mm2, vorzugsweise 400 bis 2000 N/mm2, insbesondere 600 bis 1800 N/mm2 und in Querrichtung 400 bis 3000 N/mm2, vorzugsweise 500 bis 2500 N/mm2, insbesondere 600 bis 2200 N/mm2.

Die erfindungsgemäße Folie umfasst mindestens eine poröse Schicht die aus Propylenhomopolymer und/oder Propylenblockcopolymeren aufgebaut ist und β-Nukleierungsmittel enthält. Gegebenenfalls können zusätzlich andere Polyolefine in geringen Mengen enthalten sein, soweit sie die Porosität und andere wesentliche Eigenschaften nicht nachteilig beeinflussen. Des Weiteren enthält die mikroporöse Schicht gegebenenfalls zusätzlich übliche Additive, beispielsweise Stabilisatoren, Neutralisationsmittel in jeweils wirksamen Mengen.

Die Porosität der erfindungsgemäßen Folie wird somit durch Umwandlung von βkristallinem Polypropylen beim Verstrecken der Folie erzeugt, wobei mindestens ein β-Nukleierungsmittel in der Folie vorliegt.

Geeignete Propylenhomopolymere enthalten 98 bis 100 Gew.-%, vorzugsweise 99 bis 100 Gew.-% Propyleneinheiten und besitzen einen Schmelzpunkt (DSC) von 150°C oder höher, vorzugsweise 155 bis 170°C, und im allgemeinen einen Schmelzflußindex von 0,5 bis 10 g/10 min, vorzugsweise 2 bis 8 g/10 min, bei 230°C und einer Kraft von 2,16 kg (DIN 53735). Isotaktische Propylenhomopolymere mit einem n-heptan löslichen Anteil von unter 15 Gew.-%, vorzugsweise 1 bis 10 Gew.-%, stellen bevorzugte Propylenhomopolymere für die Schicht dar. Vorteilhaft können auch isotaktische Propylenhomopolymere mit einer hohen Kettenisotaktizität von mindestens 96%, vorzugsweise 97 - 99% ($^{13}$C-NMR; Triaden Methode) eingesetzt werden. Diese Rohstoffe sind als HIPP (Hoch isotaktische Polypropylene) oder HCPP (Hoch Kristalline Polypropylene) Polymere im Stand der Technik bekannt und zeichnen sich durch eine hohe Stereoregularität der Polymerketten, höhere Kristallinität und einen höheren Schmelzpunkt aus (im Vergleich zu Propylenpolymeren mit einer $^{13}$C-NMR-Isotaktizität von 90 bis <96%, die gleichfalls eingesetzt werden können).

Propylen-Blockcopolymere haben einen Schmelzpunkt von über 140 bis 175°C, vorzugsweise von 150 bis 170°C, insbesondere 150 bis 165°C und einen Schmelzebereich der bei über 120°C, vorzugsweise in einem Bereich von 125 - 140°C beginnt. Der Comonomer-, vorzugsweise Ethylen-Gehalt liegt beispielsweise zwischen 1 und 20 Gew.-%, bevorzugt 1 und 10 Gew.-%. Der Schmelzflußindex der Propylen-Blockcopolymere liegt im Allgemeinen in einem Bereich von 1 bis 20 g/10min, vorzugsweise 1 bis 10 g/10min.

Gegebenenfalls kann die poröse Schicht zusätzlich andere Polyolefine enthalten, soweit sie die Eigenschaften, insbesondere die Porosität und die mechanischen Festigkeiten und die Durchlässigkeit, nicht negativ beeinflussen. Andere Polyolefine sind beispielsweise statistische Copolymere von Ethylen und Propylen mit einem Ethylengehalt von 20 Gew.-% oder weniger, statistische Copolymere von Propylen mit $C_4$-$C_8$-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger, oder andere Polyethylene, wie LDPE, VLDPE, und LLDPE.

Als β-Nukleierungsmittel sind für die poröse Schicht grundsätzlich alle bekannten Zusatzstoffe geeignet, welche die Bildung von β-Kristallen des Polypropylens beim Abkühlen einer Polypropylenschmelze fördern. Derartige β-Nukleierungsmittel, als auch ihre Wirkungsweise in einer Polypropylenmatrix, sind an sich im Stand der Technik bekannt und werden nachstehend im Einzelnen beschrieben.

Von Polypropylen sind verschiedene kristalline Phasen bekannt. Beim Abkühlen einer Schmelze bildet sich üblicherweise überwiegend das α-kristalline PP, dessen Schmelzpunkt bei ca. 158 - 165 °C liegt. Durch eine bestimmte Temperaturführung kann beim Abkühlen ein geringer Anteil an β-kristalliner Phase erzeugt werden, welche gegenüber der monoklinen α-Modifikation mit 144-150°C einen deutlich niedrigeren Schmelzpunkt aufweist. Im Stand der Technik sind Additive bekannt, die zu einem erhöhten Anteil der β-Modifikation beim Abkühlen des Polypropylens führen, beispielsweise γ-Quinacridone, Dihydroquinacridine oder Calciumsalze der Phthalatsäure.

Für die Zwecke der vorliegenden Erfindung werden vorzugsweise hochaktive β-Nukleierungsmittel eingesetzt, welche beim Abkühlen einer Propylenhomopolymerschmelze (PP-Anteil 100%) einen β-Anteil von 40-95%, vorzugsweise von 50-85% (DSC) erzeugen. Der β-Anteil wird aus dem DSC der abgekühlten Propylenhomopolymerschmelze bestimmt. Bevorzugt ist beispielsweise ein zweikomponentiges β-Nukleierungssystem aus Calciumcarbonat und organischen Dicarbonsäuren, welches in der DE 3610644 beschrieben ist, worauf hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-A-0557721 beschriebenen Dicarboxamide insbesondere N,N-Dicyclohexyl-2,6-Naphtalendicarboxamide sind geeignete β-Nukleierungsmittel. Des weiteren sind nano Dicarbonsäuresalze, z.B. Pimelate oder Suberate mit einer Teilchengröße von >500nm, vorzugsweise < 100nm, wie in der WO2011047797A1 beschrieben besonders geeignet. Diese nano Dicarbonsäuresalze werden aus einer Dispersion aus einer nicht-wässrigen flüssigen Phase und dispergierten Dicarbonsäuresalzen hergestellt. Hierzu wird ausdrücklich auf die in der WO2011047797A1 beschriebenen Nukleierungsmittel verwiesen.

Zusätzlich zu den β-Nukleierungsmitteln ist die Einhaltung eines bestimmten Temperaturbereiches und Verweilzeiten bei diesen Temperaturen beim Abkühlen des Schmelzefilms für die Erzielung eines hohen Anteils an β-kristallinem Polypropylen wichtig. Die Abkühlung des Schmelzefilms erfolgt vorzugsweise bei einer Temperatur von 60 bis 140°C, insbesondere 80 bis 130°C. Eine langsame Abkühlung fördert das Wachstum der β-Kristallite ebenfalls, daher sollte die Abzugsgeschwindigkeit, d.h. die Geschwindigkeit mit welcher der Schmelzefilm über die erste Kühlwalze läuft, langsam sein, damit die notwendigen Verweilzeiten bei den gewählten Temperaturen ausreichend lange sind. Die Abzugsgeschwindigkeit beträgt vorzugsweise weniger als 25 m/min, insbesondere 1 bis 20 m/min. Die Verweilzeiten des Schmelzefilms auf der Abzugswalze bei der jeweiligen Temperatur sollte länger als 15s, vorzugsweise länger als 40s insbesondere länger als 60s betragen.

Besonders bevorzugte Ausführungsformen der erfindungsgemäßen mikroporösen Folie enthalten 50 bis 10.000ppm, vorzugsweise 50 bis 5000ppm, insbesondere 50 bis 2000ppm Calcium-Pimelat oder Calcium-Suberat als β-Nukleierungsmittel in der porösen Schicht.

Die poröse Schicht enthält im allgemeinen 45 bis <100 Gew.-%, vorzugsweise 50 bis 95 Gew.-%, Propylenhomopolymere und/oder Propylenblockcopolymer und 0,001 bis 5 Gew.-%, vorzugsweise 50 - 10.000 ppm mindestens eines β-Nukleierungsmittels, bezogen auf das Gewicht der porösen Schicht. Für den Fall, daß weitere Polyolefine, beispielsweise die vorstehend beschriebenen "anderen Polyolefine", in der Schicht enthalten sind, wird der Anteil des Propylenhomopolymeren oder des Blockcopolymeren entsprechend reduziert. Im Allgemeinen wird die Menge der zusätzlichen anderen Polymeren in der Schicht 0 bis <10 Gew.-%, vorzugsweise 0 bis 5 Gew.-%, insbesondere 0,5 bis 2 Gew.-% betragen, wenn diese zusätzlich enthalten sind. In gleicher Weise gilt, daß der besagte Propylenhomopolymer oder Propylenblockcopolymer Anteil reduziert wird, wenn höhere Mengen von bis zu 5 Gew.-% Nukleierungsmittel eingesetzt werden. Zusätzlich kann die Schicht übliche Stabilisatoren und Neutralisationsmittel, sowie gegebenenfalls weitere Additive, in den üblichen geringen Mengen von unter 2 Gew.-% enthalten.

In einer bevorzugten Ausführungsform ist die poröse Schicht aus einer Mischung aus Propylenhomopolymer und Propylenblockcopolymer aufgebaut. Die poröse Schicht enthält in diesen Ausführungsformen im allgemeinen 50 bis 85 Gew.-%, vorzugsweise 60 bis 75 Gew.-%, Propylenhomopolymere und 15 bis 50 Gew.-% Propylenblockcopolymere, vorzugsweise 25 bis 40 Gew.-%, und 0,001 bis 5 Gew.-%, vorzugsweise 50 - 10.000 ppm mindestens eines β-Nukleierungsmittels, bezogen auf das Gewicht der Schicht, sowie gegebenenfalls die bereits erwähnten Additive wie Stabilisatoren und Neutralisationsmittel. Auch hier gilt, daß weitere Polyolefine in einer Menge von 0 bis <20 Gew.-%, vorzugsweise 0,5 bis 15 Gew.-%, insbesondere 1 bis 10 Gew.-% enthalten sein können und der Anteil des Propylenhomopolymeren oder des Blockcopolymeren dann entsprechend reduziert wird.

Die mikroporöse Membranfolie kann ein oder mehrschichtig sein. Die Dicke der Membranfolie liegt im Allgemeinen in einem Bereich von 10 bis 150 μm, vorzugsweise 15 bis 100 μm. Die mikroporöse Folie kann mit einer Corona, Flamm- oder Plasmabehandlung versehen werden, um die Befüllung mit Elektrolyten zu verbessern.

In einer mehrschichtigen Ausführungsform umfasst die Folie weitere poröse Schichten, welche wie vorstehend beschrieben aufgebaut sind, wobei die Zusammensetzung der verschiedenen porösen Schichten nicht unbedingt identisch sein muss.

Die Dichte der mikroporösen Folie liegt im Allgemeinen in einem Bereich von min. 0,35g/cm$^3$ bis 0,6 g/cm$^3$, vorzugsweise 0,35 bis 0,55 g/cm$^3$. Für die Verwendung der Folie als Separator in Doppelschichtkondensatoren sollte die Folie einen Gurley Wert von 50 bis <500 s aufweisen, vorzugsweise von 80 bis 450 s. Der Bubble point der Folie sollte nicht über 350nm, vorzugsweise 50 bis 300nm liegen und der mittlere Porendurchmesser sollte im Bereich 50 bis 100 nm, bevorzugt im Bereich 60 - 80 nm liegen.

Die erfindungsgemäße Folie hat in Längsrichtung bei 100°C und 1 Stunde einen Längsschrumpf von ≤ 10%, vorzugsweise ≤5 % und in Querrichtung einen Schrumpf bei 100°C und 1 Stunde von ≤10%, vorzugsweise ≤5 %, insbesondere >0 bis <2%. Die Durchstoßfestigkeit der erfindungsgemäßen Folie beträgt mindestens 0,3N pro μm Foliendicke, vorzugsweise mindestens 0,35N pro μm Foliendicke, wobei die Durchstoßfestigkeit maximal 1N/μm, vorzugsweise maximal 0,8N/μm beträgt

Die erfindungsgemäße poröse Folie wird vorzugsweise nach dem an sich bekannten Flachfolien-Coextrusionsverfahren hergestellt. Im Rahmen dieses Verfahrens wird so vorgegangen, daß die Mischungen aus Propylenhomopolymer und/oder Propylenblockcopolymer, β-Nukleierungsmittel der jeweiligen Schicht vermischt, in einem Extruder aufgeschmolzen und gegebenenfalls gemeinsam und gleichzeitig durch eine Flachdüse auf eine Abzugswalze extrudiert oder coextrudiert werden, auf der sich der ein- oder mehrschichtige Schmelzefilm unter Ausbildung der β-Kristallite verfestigt und abkühlt. Die Abkühltemperaturen und Abkühlzeiten werden so gewählt, daß ein möglichst hoher Anteil an β-kristallinem Polypropylen in der Vorfolie entsteht. Im allgemeinen beträgt der Anteil an β-Kristalliten in der Vorfolie 30 - 80%, vorzugsweise 40 - 70%. Diese Vorfolie mit einem hohen Anteil an β-kristallinem Polypropylen wird anschließend derart biaxial gestreckt, daß es bei der Verstreckung zu einer Umwandlung der β-Kristallite in α-Polypropylen und zur Ausbildung einer netzwerkartigen porösen Struktur kommt. Die biaxial gestreckte Folie wird abschließend thermofixiert und gegebenenfalls auf einer oder beiden Seiten corona-, plasma- oder flammbehandelt.

Die biaxiale Streckung (Orientierung) wird im Allgemeinen aufeinanderfolgend durchgeführt werden, wobei vorzugsweise zuerst längs (in Maschinenrichtung) und dann quer (senkrecht zur Maschinenrichtung) gestreckt wird.

Die Abzugswalze oder die Abzugswalzen werden bei einer Temperatur von 60 bis 135°C, vorzugsweise 100 bis 130°C gehalten, um die Ausbildung eines hohen Anteils an β-kristallinem Polypropylen in beiden Schichten zu fördern.

Bei der Verstreckung in Längsrichtung beträgt die Temperatur ($T_L$) weniger als 140°C, vorzugsweise 70 bis 120°C. Das Längs-Streckverhältnis liegt in einem Bereich von 2:1 bis 5:1, vorzugsweise 3:1 bis 4,5:1. Die Verstreckung in Querrichtung erfolgt bei einer Temperatur ($T_Q$) von 120 -150°C. Das Querstreckverhältnis liegt in einem Bereich von 2:1 bis 9:1, vorzugsweise 3:1 - 8:1.

Das Längsstrecken wird man zweckmäßigerweise mit Hilfe zweier entsprechend dem angestrebten Streckverhältnis verschieden schnelllaufender Walzen durchführen und das Querstrecken mit Hilfe eines entsprechenden Kluppenrahmens.

Hierzu wird die Folie nach dem Längsstrecken gegebenfalls wieder über entsprechend temperierte Walzen abgekühlt. Anschließend erfolgt in den sogenannten Aufheizfeldern wieder eine Erwärmung auf die Querstrecktemperatur ($T_Q$), die im Allgemeinen bei einer Temperatur von 120 -150°C liegt. Anschließend erfolgt das Querstrecken mit Hilfe eines entsprechenden Kluppenrahmens, wobei das Querstreckverhältnis in einem Bereich von 2:1 bis 9:1, vorzugsweise 3:1 - 8:1 liegt. Zur Erzielung der erfindungsgemäß hohen Porositäten erfolgt die Querstreckung mit einer moderaten bis langsamen Querstreckgeschwindigkeit von >0 bis 40%/s, vorzugsweise in einem Bereich von 0,5 bis 30%/s, insbesondere 1 bis 15%/s.

Gegebenenfalls wird, wie oben erwähnt, nach der biaxialen Streckung eine Oberfläche der Folie nach einer der bekannten Methoden corona-, plasma- oder flammbehandelt.

An die biaxiale Streckung der Folie schließt sich erfindungsgemäß eine spezielle thermische Behandlung an (Thermofixierung) an. Diese thermische Nachbehandlung kann beispielsweise über Walzen oder einen Luftheizkasten in Line mit dem Produktionsprozess erfolgen oder in einem getrennten, separaten Verfahrensschritt, wobei die aufgewickelte Folie auf der Rolle thermisch behandelt oder während eines Umwickelvorganges behandelt wird. Mit Hilfe der speziellen Prozessparameter während der Fixierung wird eine deutlich erhöhte Durchstoßfestigkeit erreicht , wobei die restlichen Parameter so erhalten bleiben, dass die Folie weiterhin für den beabsichtigten Zweck geeignet ist bzw. bleibt.

Überraschenderweise haben Folien, bei denen die Prozessparameter in der thermischen Behandlung (Thermofixierung) so gewählt wurden, dass das Produkt aus Temperatur während der Thermofixierung in Celsius ($T_F$) und Dauer der Thermofixierung in Sekunden ($t_F$) mindestens 3000 beträgt, eine deutlich verbesserte Durchstoßfestigkeit von min. $0,3N/\mu m$ unter gleichzeitiger Erhöhung der Dichte auf min. $0,35g/cm3$. Die erfindungsgemäße Beziehung der erfindungsgemäßen thermischen Behandlung (Thermofixierung) lautet somit $T_F \times t_F \geq 3000°Cs$, vorzugsweise $\geq 3500°Cs$.

Bei niedriger Temperatur in den Fixierfeldern ($T_F$) ist eine längere Verweilzeit in der Fixierung ($t_F$) positiv. Die maximale Temperatur während der Thermofixierung ($T_F$) beträgt $\leq 160°C$, vorzugsweise $\leq 155°C$

Die Durchstoßfestigkeit von Polyolefin Separatoren kann somit deutlich verbessert werden. Die erfindungsgemäße thermische Behandlung (Thermofixierung) der Folie beinhaltet mindestens einen Zeitraum von $\geq 20$ s, vorzugsweise $\geq 25$ s und eine Temperatur im Bereich von 100 bis 150°C, vorzugsweise 120 -160°C, wobei die erfindungsgemäße Beziehung $T_F \times t_F \geq 3000°Cs$, vorzugsweise $\geq 3500°Cs$, eingehalten werden muss.

Diese thermische Nachbehandlung kann beispielsweise über Walzen oder einen Luftheizkasten in Line (online) mit dem Produktionsprozess erfolgen oder in einem separaten Verfahrensschritt, wobei die aufgewickelte Folie auf der Rolle thermisch behandelt oder während eines Umwickelvorganges behandelt wird. Bei niedriger Temperatur in der Thermofixierung ($T_F$) ist eine längere Verweilzeit in der Fixierung ($t_F$) positiv. Insoweit die thermische Nachbehandlung in Line mit dem Produktionsprozess erfolgt ist es von Vorteil wenn die Temperatur in der Thermofixierung ($T_F$) größer ist als die Temperatur in der Querverstreckung (TQ) und die Temperatur in der Querverstreckung (TQ) wiederum größer ist als die Temperatur in der Längsverstreckung (TL). Die erfindungsgemäße Beziehung der thermischen Behandlung (Thermofixierung), insbesondere bei in Line Herstellung, lautet somit $T_F \times t_F \geq 3000°Cs$, vorzugsweise $\geq 3500°Cs$, und $T_F > T_Q > T_L$.

Besonders bevorzugt ist wenn die Temperatur in der Thermofixierung ($T_F$) min. 5°C größer ist als die Temperatur in der Querverstreckung ($T_Q$) und die Temperatur in der Querverstreckung ($T_Q$) wiederum min. 5°C größer ist als die Temperatur in der Längsverstreckung ($T_L$).

Gegebenenfalls wird die Folie unmittelbar vor oder während der Thermofixierung konvergierend gefahren, wobei die Konvergenz vorzugsweise 5 - 25%, insbesondere 8 bis 20%, besonders bevorzugt 10 bis 15%, beträgt. Unter Konvergenz versteht man ein leichtes Zusammenfahren des Querstreckrahmens, so dass die maximale Breite des Rahmens die am Ende des Querstreckprozeßes gegeben ist größer als die Breite am Ende der Thermofixierung ist. Entsprechendes gilt selbstverständlich für die Breite der Folienbahn. Der Grad des Zusammenlaufens des Querstreckrahmens wird als Konvergenz angegeben, die aus der maximalen Breite des Querstreckrahmens $B_{max}$ und der Endfolienbreite $B_{Folie}$ nach der folgenden Formel berechnet wird:

.

$$\text{Konvergenz } [\%] = 100 \times (B_{max} - B_{Folie}) / B_{max}$$

Die erfindungsgemäße poröse Folie zeigt infolge der hohen Durchstoßfestigkeit wesentliche Vorteile gegenüber Papierseparatoren, Vliesen und herkömmlichen Polyolefinseparatoren. Insbesondere zeichnet sich die mikroporöse Folie durch eine deutlich bessere mechanische Festigkeit sowie hohe Verarbeitungssicherheit bei der Fertigung von Lithium Batterien oder Doppelschichtkondensatoren aus. Des Weiteren zeigen sie einen deutlich geringeren Ausschuss bei fertigen Lithium Batterien oder Doppelschichtkondensatoren. Auch können dickere herkömmliche Separatoren durch dünnere erfindungsgemäße Separatoren mit der erhöhten Durchstoßfestigkeit ersetzt werden, was zu einer Erhöhung der Energiedichte in dem Energiespeichermedium führt.

Zur Charakterisierung der Rohstoffe und der Folien wurden die folgenden Meßmethoden benutzt:

Schmelzflußindex:
Der Schmelzflußindex der Propylenpolymeren wurde nach DIN 53 735 bei 2,16 kg Belastung und 230 °C gemessen.

Schmelzpunkt:
Der Schmelzpunkt ist im Sinne der vorliegenden Erfindung das Maximum der DSC Kurve. Zur Bestimmung des Schmelzpunkts wird eine DSC-Kurve mit einer Aufheiz- und Abkühlgeschwindigkeit von 10K/1min im Bereich von 20 bis 200°C aufgenommen. Für die Bestimmung des Schmelzpunkts wird wie üblich die zweite Aufheizkurve nachdem mit 10K/1min im Bereich von 200 bis 20°C abgekühlt wurde ausgewertet.

$\beta$-Gehalt der Vorfolie:
Die Bestimmung des $\beta$-Gehaltes der Vorfolie erfolgt ebenfalls über eine DSC-Messung, die an der Vorfolie folgendermaßen durchgeführt wird: Die Vorfolie wird in der DSC zunächst mit einer Aufheizrate von 10K/min auf 220°C erhitzt und aufgeschmolzen und wieder abgekühlt Aus der 1.Aufheizkurve wird der Kristallinitätsgrad $K_{\beta,DSC}$ als Verhältnis der Schmelzenthalpien der $\beta$-kristallinen Phase ($H_\beta$) zu der Summe der Schmelzenthalpien von $\beta$- und $\alpha$-kristalliner Phase ($H_\beta + H_\alpha$) bestimmt.

$$\beta - Gehalt[\%] = -\frac{H\beta}{H\alpha + H\beta} * 100$$

Dichte:
Die Dichte ($\delta Sep$) wird nach DIN 53 479, Verfahren A, bestimmt.

Porosität:
Als Porosität wird das für den Zugang des Elektrolyten freie Volumen in der Separator Folie in % wie folgt berechnet:

$$Porosität[\%] = -\frac{\delta Sep - 0,925}{0,925} * 100[\%]$$

Dabei wurde eine Dichte des Polypropylens von 0,925 g/cm$^3$ zugrunde gelegt.

Permeabilität (Gurley-Wert)

Die Permeabilität der Folien wurde mit dem Gurley Tester 4110, nach ASTM D 726-58 gemessen. Dabei wird die Zeit (in sec) bestimmt die 100 cm$^3$ Luft benötigen, um durch die Etikettenfläche von 1 Inch$^2$ (6,452 cm$^2$) zu permeieren. Die Druckdifferenz über der Folie entspricht dabei dem Druck einer Wassersäule von 12,4 cm Höhe. Die benötigte Zeit entspricht dann dem Gurley-Wert.

Schrumpf:

Die Längs- und Querschrumpfwerte beziehen sich auf die jeweilige Längenausdehnung der Folie (längs $L_0$ und quer $Q_0$) vor dem Schrumpfprozeß. Die Längsrichtung ist die Maschinenrichtung, als Querrichtung wird entsprechend die Richtung quer zum Maschinenlauf definiert. Der Probekörper von 10*10cm$^2$ wird im Umluftofen bei der jeweiligen Temperatur (100°C) über eine Dauer von 60 min geschrumpft. Anschließend werden die verbliebenen Längenausdehnungen des Probekörpers längs und quer erneut bestimmt ($L_1$ und $Q_1$). Als Schrumpf in % wird dann die Differenz der ermittelten Längenausdehnungen im Verhältnis zur ursprünglichen Länge $L_0$ und $Q_0$ mal 100 angegeben.

$$Längsschrumpf \ L_s[\%] \ = \ \frac{L_0 - L_1}{L_0} * 100[\%]$$

$$Querschrumpf\ Q_s[\%]\ =\ \frac{Q_0 - Q_1}{Q_0} * 100[\%]$$

Diese Bestimmungsmethode für den Längs- und Querschrumpf entspricht DIN 40634.

E-Modul

Der E-Modul wird gemäss DIN-ISO 527 (Zugmodul) bestimmt.

Durchstoßfestigkeit (statische)

Die statische Durchstoßfestigkeiten wurde nach der ASTM F 1306 bestimmt.

Dynamische Durchstoßfestigkeit

Die dynamische Durchstoßfestigkeiten wurde nach der ASTM D3420 bestimmt.
Die Erfindung wird nunmehr durch die nachfolgenden Beispiele erläutert.

Beispiel 1

Nach dem Extrusionsverfahren wurde aus einer Breitschlitzdüse bei einer Extrusionstemperatur von jeweils 240°C bis 250°C eine einschichtige Vorfolie extrudiert. Diese Vorfolie wurde zunächst auf einer Kühlwalze abgezogen und abgekühlt. Anschließend wurde die Vorfolie auf die Längsstrecktemperatur erwärmt und über verschieden schnelllaufende Walzen längsgestreckt. Danach wird die Folie über Kühlwalzen gefahren und abgekühlt. Anschließend wird die Folie in die Aufheizfeder des Querstreckrahmens geführt, auf die Querstrecktemperatur aufgeheizt und in Querrichtung orientiert. Nach dieser Querorientierung erfolgt die Thermofixierung, bei der Folie konvergierend gefahren wird. Die Folie hatte die folgende Zusammensetzung:

ca. 80 Gew.-% hochisotaktisches Propylenhomopolymerisat (PP) mit einer $^{13}$C-NMR Isotaktizität von 97% und einem n-heptanlöslichen Anteil von 2,5 Gew.-%
(bezogen auf 100 % PP) und einem Schmelzpunkt von 165°C; und einem Schmelzflußindex von 2,5 g/10 min bei 230 °C und 2,16 kg Belastung (DIN 53 735) und
ca. 20 Gew.-% Propylen-Ethylen-Blockcopolymerisat mit einem Ethylenanteil
von 5 Gew.-% bezogen auf das Blockcopolymer und einem MFI (230°C und 2,16 kg) von 6 g/10min und einem Schmelzpunkt (DSC) von 165°C eingesetzt und
0,04 Gew.-% Ca-Pimelat als β-Nukleierungsmittel.

Die Folie enthielt zusätzlich in beiden Schichten Stabilisator und Neutralisationsmittel in üblichen geringen Mengen.
Im Einzelnen wurden die folgenden Bedingungen und Temperaturen bei der Herstellung der Folie gewählt:

| | |
|---|---|
| Extrusion: | Extrusionstemperatur 235°C |
| Abzugswalze: | Temperatur 125°C, |
| Abzugsgeschwindigkeit: | 4m/min |
| Verweilzeit auf derAbzugswalze: | 60 s |
| Längsstreckung: | Streckwalze T = 90°C |
| Längsstreckung um den | Faktor 3.8 |
| Querstreckung: | Aufheizfelder T = 125°C |
| Streckfelder | T = 125°C |
| Querstreckung um den | Faktor 5.0 |
| Fixierung: | T = 130°C |
| Konvergenz | 10% |
| Verweilzeit im Fixierfeld: | 40s |

Die so hergestellte poröse Folie war ca. 25 μm dick. Die Folie hat eine Dichte von 0,35 g/cm³ und zeigte ein gleichmäßiges weiß-opakes Aussehen. Als Durchstoßfestigkeit wurde ein Wert von 8700 mN ermittelt, was 0,35N/$\mu$m entspricht.

Beispiel 2:

Es wurde eine Folie wie in Beispiel 1 beschrieben hergestellt. Im Unterschied zu Beispiel 1 wurde in der Thermofixierung die Temperatur auf 145°C angehoben. Die Verweilzeit in der Fixierung auf 25 s reduziert und eine Konvergenz von 12,5 % eingestellt. Im Übrigen wurde die Zusammensetzung der Folie nicht geändert und die übrigen Verfahrensbedingungen wurden beibehalten. Die Folie wies eine Dichte von 0,37 g/cm$^3$ auf und zeigte ein gleichmäßiges weiß-opakes Aussehen. Als Durchstoßfestigkeit wurde ein Wert von 8900 mN ermittelt, was 0,36N/$\mu$m entspricht.

Beispiel 3

Es wurde eine Folie wie in Beispiel 1 beschrieben hergestellt. Im Unterschied zu Beispiel 1 wurde in der Thermofixierung die Temperatur auf 150°C angehoben. Die Verweilzeit in der Fixierung auf 30s reduziert und eine Konvergenz von 8 % eingestellt. Im Übrigen wurde die Zusammensetzung der Folie nicht geändert und die übrigen Verfahrensbedingungen wurden beibehalten. Die Folie wies eine Dichte von 0,41g/cm$^3$ auf und zeigte ein gleichmäßiges weiß-opakes Aussehen. Als Durchstoßfestigkeit wurde ein Wert von 8800 mN ermittelt, was 0,35N/$\mu$m entspricht.

Beispiel 4

Es wurde eine Folie wie in Beispiel 1 beschrieben hergestellt. Im Unterschied zu Beispiel 1 wurde in der Thermofixierung die Temperatur auf 155°C angehoben. Die Verweilzeit in der Fixierung auf 30s reduziert und eine Konvergenz von 8 % eingestellt. Im Übrigen wurde die Zusammensetzung der Folie nicht geändert und die übrigen Verfahrensbedingungen wurden beibehalten. Die Folie wies eine Dichte von 0,44g/cm$^3$ auf und zeigte ein gleichmäßiges weiß-opakes Aussehen. Als Durchstoßfestigkeit wurde ein Wert von 8900 mN ermittelt, was 0,37N/$\mu$m entspricht.

Beispiel 5

Es wurde eine Folie wie in Beispiel 1 beschrieben hergestellt. Im Unterschied zu Beispiel 1 wurde die Abzugsgeschwindigkeit auf 4,5 m/min erhöht, in der Thermofixierung die Temperatur auf 150°C angehoben. Die Verweilzeit in der Fixierung auf 40 s angehoben und eine Konvergenz von 10 % eingestellt. Im Übrigen wurde die Zusammensetzung der Folie nicht geändert und die übrigen Verfahrensbedingungen wurden beibehalten. Die Foliendicke reduziert sich dabei auf 21$\mu$m. Sie wies eine Dichte von 0,43g/cm$^3$ auf und zeigte ein gleichmäßiges weiß-opakes Aussehen. Als Durchstoßfestigkeit wurde ein Wert von 8700 mN ermittelt, was 0,41 N/$\mu$m entspricht.

Beispiel 6

Es wurde eine Folie wie in Beispiel 1 beschrieben hergestellt. Im Unterschied zu Beispiel 1 wurde die Abzugsgeschwindigkeit auf 5 m/min erhöht, in der Thermofixierung die Temperatur auf 150°C angehoben. Die Verweilzeit in der Fixierung auf 40 s angehoben und eine Konvergenz von 10 % eingestellt. Im Übrigen wurde die Zusammensetzung der Folie nicht geändert und die übrigen Verfahrensbedingungen wurden beibehalten. Die Foliendicke reduziert sich dabei auf 18$\mu$m. Sie wies eine Dichte von 0,43 g/cm$^3$ auf und zeigte ein gleichmäßiges weiß-opakes Aussehen. Als Durchstoßfestigkeit wurde ein Wert von 8400 mN ermittelt, was 0,47N/$\mu$m entspricht.

Vergleichsbeispiel 1

Es wurde eine Folie wie in Beispiel 1 beschrieben hergestellt. Im Unterschied zu Beispiel 1 wurde in der Thermofixierung die Temperatur auf 140°C angehoben. Die Verweilzeit in der Fixierung war 20 s. Im Übrigen wurde die Zusammensetzung der Folie nicht geändert und die übrigen Verfahrensbedingungen wurden beibehalten. Die Folie war 25 $\mu$m dick, wies eine Dichte von 0,33 g/cm$^3$ auf und zeigte ein gleichmäßiges weiß-opakes Aussehen. Als Durchstoßfestigkeit wurde ein Wert von nur 6200 mN ermittelt, was 0,25N/$\mu$m entspricht.

Vergleichsbeispiel 2

Es wurde eine Folie wie in Beispiel 1 beschrieben hergestellt. Im Unterschied zu Beispiel 1 wurde in der Thermofixierung die Temperatur auf 145°C angehoben. Die Verweilzeit in der Fixierung war 20 s. Im Übrigen wurde die Zusammensetzung der Folie nicht geändert und die übrigen Verfahrensbedingungen wurden beibehalten. Die Folie war

25 μm dick, wies eine Dichte von 0,34 g/cm$^3$ auf und zeigte ein gleichmäßiges weiß-opakes Aussehen. Als Durchstoßfestigkeit wurde ein Wert von nur 6100 mN ermittelt, was 0,24N/μm entspricht.

Vergleichsbeispiel 3

Es wurde eine Folie wie in Beispiel 1 beschrieben hergestellt. Im Unterschied zu Beispiel 1 wurde in der Thermofixierung die Temperatur auf 140°C angehoben. Die Verweilzeit in der Fixierung war 20 s und die Konvergenz betrug 5 %. Im Übrigen wurde die Zusammensetzung der Folie nicht geändert und die übrigen Verfahrensbedingungen wurden beibehalten. Die Folie war 25 μm dick, wies eine Dichte von 0,26 g/cm$^3$ auf und zeigte ein gleichmäßiges weiß-opakes Aussehen. Als Durchstoßfestigkeit wurde ein Wert von nur 5300 mN ermittelt, was 0,21N/μm entspricht.

Vergleichsbeispiel 4

Es wurde eine Folie wie in Beispiel 1 beschrieben hergestellt. Im Unterschied zu Beispiel 1 wurde die Abzugsgeschwindigkeit auf 2,5 m/min erniedrigt, in der Thermofixierung die Temperatur auf 140°C angehoben. Die Verweilzeit in der Fixierung auf 20s angehoben und eine Konvergenz von 5 % eingestellt. Im Übrigen wurde die Zusammensetzung der Folie nicht geändert und die übrigen Verfahrensbedingungen wurden beibehalten. Die Foliendicke erhöhte sich auf 40 μm. Sie wies eine Dichte von 0,33 g/cm$^3$ auf und zeigte ein gleichmäßiges weiß-opakes Aussehen. Als Durchstoßfestigkeit wurde ein Wert von 11300 mN ermittelt, was 0,28N/μm entspricht.

Vergleichsbeispiel 5

Es wurde eine Folie wie in Beispiel 1 beschrieben hergestellt. Im Unterschied zu Beispiel 1 wurde in der Thermofixierung die Temperatur auf 110°C erniedrigt. Die Verweilzeit in der Fixierung auf 20 s reduziert und eine Konvergenz von 10 % eingestellt. Im Übrigen wurde die Zusammensetzung der Folie nicht geändert und die übrigen Verfahrensbedingungen wurden beibehalten. Die Foliendicke reduziert sich dabei auf 25μm. Sie wies eine Dichte von 0,32 g/cm$^3$ auf und zeigte ein gleichmäßiges weiß-opakes Aussehen. Als Durchstoßfestigkeit wurde ein Wert von 6400 mN ermittelt, was 0,26N/μm entspricht.

Vergleichsbeispiel 6

Es wurde eine Folie wie in Beispiel 1 beschrieben hergestellt. Im Unterschied zu Beispiel 1 wurde die Temperatur der abzugswalze auf 110°C erniedrigt. In der Thermofixierung wurde die Temperatur von 110°C eingestellt. Die Verweilzeit in der Fixierung aber auf 20 s reduziert und eine Konvergenz von 10 % eingestellt.. Im Übrigen wurde die Zusammensetzung der Folie nicht geändert und die übrigen Verfahrensbedingungen wurden beibehalten. Die Folie war 25 μm dick, wies eine Dichte von 0,6 g/cm$^3$ auf und zeigte ein gleichmäßiges weiß-opakes Aussehen. Als Durchstoßfestigkeit wurde ein Wert von 9800 mN ermittelt, was 0,39N/μm entspricht. Der ermittelte Gurleywert von 2400 s ist jedoch für den Einsatz der Folie als Separator inakzeptabel.

Tabelle 1.

| | Dicke / µm | Dichte / g/cm³ | Porosität / % | Gurley / s | Temp. Fixierung $T_F$/°C | Zeit Fixierung /$t_F$/s | Konvergenz /% | Schrumpf MD / % 1h@100°C | Schrumpf TD / % 1h@100°C | Durchstoßfestigkeit Statisch N | Durchstoßfestigkeit Statisch N/µm | $T_F$ x $t_F$ |
|---|---|---|---|---|---|---|---|---|---|---|---|---|
| Bsp. 1 | 25 | 0,35 | 62 | 210 | 130 | 40 | 10 | 3,4 | 1,8 | 8,7 | 0,35 | 5200 |
| Bsp. 2 | 25 | 0,37 | 59 | 263 | 145 | 25 | 12,5 | 2,5 | 0,6 | 8,9 | 0,36 | 3625 |
| Bsp. 3 | 25 | 0,41 | 55 | 293 | 150 | 30 | 8 | 2,3 | 0,3 | 8,8 | 0,35 | 4500 |
| Bsp. 4 | 24 | 0,44 | 52 | 384 | 155 | 30 | 8 | 1,8 | 0,2 | 8,9 | 0,37 | 4650 |
| Bsp. 5 | 21 | 0,43 | 53 | 420 | 150 | 40 | 10 | 2,8 | 0,6 | 8,7 | 0,41 | 6000 |
| Bsp. 6 | 18 | 0,43 | 53 | 400 | 150 | 40 | 10 | 2,7 | 0,4 | 8,4 | 0,47 | 6000 |
| Vgl. 1 | 25 | 0,33 | 64 | 140 | 140 | 20 | 10 | 2,2 | 3,2 | 6,2 | 0,25 | 2800 |
| Vgl. 2 | 25 | 0,34 | 63 | 158 | 145 | 20 | 10 | 2,0 | 2,5 | 6,1 | 0,24 | 2900 |
| Vgl. 3 | 25 | 0,26 | 72 | 95 | 140 | 20 | 5 | 2,2 | 3,3 | 5,3 | 0,21 | 2800 |
| Vgl. 4 | 40 | 0,33 | 64 | 160 | 140 | 20 | 5 | 3,7 | 3,6 | 11,3 | 0,28 | 2800 |
| Vgl. 5 | 25 | 0,32 | 60 | 140 | 110 | 20 | 10 | 6,2 | 10,5 | 6,4 | 0,26 | 2200 |
| Vgl. 6 | 25 | 0,6 | 36 | 2400 | 110 | 20 | 10 | 3,8 | 4,5 | 9,8 | 0,39 | 2200 |

Tabelle 2

| | Dicke/ $\mu m$ | Dichte / g/ $cm^3$ | Porosität /% | Gurley /s | Temp. Fixierung $T_F$/ °C | Zeit Fixierung /$t_F$/ s | Durchstoßfestigkeit dynamisch N | Durchstoßfestigkeit dynamisch N/ $\mu m$ |
|---|---|---|---|---|---|---|---|---|
| Bsp. 1 | 25 | 0,35 | 62 | 210 | 130 | 40 | 6,5 | 0,26 |
| Bsp. 2 | 25 | 0,37 | 59 | 263 | 145 | 25 | 7,2 | 0,288 |
| Bsp. 3 | 25 | 0,41 | 55 | 293 | 150 | 30 | 7,5 | 0,3 |
| Bsp. 4 | 24 | 0,44 | 52 | 384 | 155 | 30 | 7,9 | 0,32917 |
| Bsp. 5 | 21 | 0,43 | 53 | 420 | 150 | 40 | 6,9 | 0,32857 |
| Bsp. 6 | 18 | 0,43 | 53 | 400 | 150 | 40 | 7,4 | 0,41111 |
| Vgl. 1 | 25 | 0,33 | 64 | 140 | 140 | 20 | 4,6 | 0,184 |
| Vgl. 2 | 25 | 0,34 | 63 | 158 | 145 | 20 | 4,7 | 0,188 |
| Vgl. 3 | 25 | 0,26 | 72 | 95 | 140 | 20 | 5,3 | 0,212 |
| Vgl.4 | 40 | 0,33 | 64 | 160 | 140 | 20 | 9,6 | 0,24 |
| Vgl.5 | 25 | 0,32 | 60 | 140 | 110 | 20 | 6,1 | 0,244 |
| Vgl. 6 | 25 | 0,6 | 36 | 2400 | 110 | 20 | 8,3 | 0,332 |

**Patentansprüche**

1. Biaxial orientierte, ein- oder mehrschichtige poröse Folie, welche mindestens eine poröse Schicht umfasst und diese Schicht mindestens ein Propylenpolymer enthält, wobei das Propylenpolymere ein Propylenhomopolymer und/oder ein Propylenblockcopolymer ist und wobei

    (i) die Porosität der porösen Folie 30% bis 80% und
    (ii) die Durchlässigkeit der porösen Folie ≤800s (Gurley Wert) beträgt, und
    (iii) einen E-Modul in Längsrichtung von ≥ 300 N/mm$^2$ und
    (iv) einen E-Modul in Querrichtung von ≥ 300 N/mm$^2$ und
    (v) eine Dichte von min. 0,35g/cm$^3$ und
    (vi) eine statische Durchstoßfestigkeit von min. 0,3N/$\mu$m und
    (vii) eine Dicke von 10 bis 150$\mu$m aufweist (jeweils gemessen wie in der Beschreibung angegeben), und wobei die Folie durch ein Verfahren umfassend die Maßnahmen:

    (i) Extrusion einer einschichtigen oder mehrschichtigen porösen Polypropylenfolie bei welchem Propylenpolymer und β-Nukleierungsmittel in einem Extruder aufgeschmolzen und durch eine Flachdüse auf eine Abzugswalze extrudiert werden,
    (ii) anschließend der extrudierte Schmelzefilm unter Ausbildung von β-Kristalliten abgekühlt und verfestigt wird,
    (iii) anschließend diese Folie in Längsrichtung und danach in Querrichtung verstreckt wird, und
    (iv) eine thermische Behandlung (Thermofixierung) durchgeführt wird, bei der das Produkt aus Temperatur während der Thermofixierung in Celsius (T$_F$) und Dauer der Thermofixierung in Sekunden (t$_F$) mindestens 3000°Cs, vorzugsweise ≥3500°Cs, beträgt (T$_F$ x t$_F$ ≥ 3000°Cs),

    erhältlich ist, wobei die maximale Temperatur während der Thermofixierung (T$_F$) ≤160°C beträgt und die thermische Behandlung (Thermofixierung) der Folie mindestens einen Zeitraum von ≥25 s und eine Temperatur im Bereich von 100 bis 160°C umfasst.

2. Folie nach Anspruch 1, **dadurch gekennzeichnet, dass** die Porosität durch Umwandlung von β-kristallinem Polypropylen beim Verstrecken der Folie erzeugt wird, wobei mindestens ein β-Nukleierungsmittel in der Folie vorliegt.

3. Folie nach einem der Anspruch 2 , **dadurch gekennzeichnet, dass** das β-Nukleierungsmittel ein Calciumsalz der Pimelinsäure und/oder der Suberinsäure und/oder ein nanoskaliges Eisenoxid ist.

4. Folie nach einem der Ansprüche 2 oder 3, **dadurch gekennzeichnet, dass** die Folie 50 bis 85 Gew.-% Propylenhomopolymer, 15 bis 50 Gew.-% Propylen-Blockcopolymer und 50 bis 10.000ppm β-Nukleierungsmittel enthält.

5. Folie nach einem der Ansprüche 1 bis 4, **dadurch gekennzeichnet, dass** die Dichte der Folie in einem Bereich 0,35 bis 0,6 g/cm$^3$ liegt.

6. Folie nach einem der Ansprüche 1 bis 5, **dadurch gekennzeichnet, dass** das die Folie eine Dicke von 15 bis 100$\mu$m aufweist.

7. Folie nach einem der Ansprüche 1 bis 6, **dadurch gekennzeichnet, dass** die Propylenpolymere nicht durch Einsatz von Metallocen-Katalysatoren hergestellt wurde.

8. Folie nach einem der Ansprüche 1 bis 7, **dadurch gekennzeichnet, dass** die Durchlässigkeit der porösen Folie 20- ≤800s (Gurley Wert) beträgt.

9. Folie nach einem der Ansprüche 1 bis 8, **dadurch gekennzeichnet, dass** der E-Modul der Folie in Längsrichtung 300 bis 3500 N/mm$^2$, vorzugsweise 400 bis 2000 N/mm$^2$, insbesondere 600 bis 1800 N/mm$^2$, beträgt.

10. Folie nach einem der Ansprüche 1 bis 9, **dadurch gekennzeichnet, dass** der E-Modul der Folie in Querrichtung 400 bis 3000 N/mm$^2$, vorzugsweise 500 bis 2500 N/mm$^2$, insbesondere 600 bis 2200 N/mm$^2$, beträgt.

11. Folie nach einem der Ansprüche 1 bis 10, **dadurch gekennzeichnet, dass** der Schrumpf in Längsrichtung bei 100°C und 1 Stunde ≤ 10%, vorzugsweise ≤5 %, beträgt.

## EP 2 903 830 B1

12. Folie nach einem der Ansprüche 1 bis 11, **dadurch gekennzeichnet, dass** der Schrumpf in Querrichtung bei 100°C und 1 Stunde ≤ 10%, vorzugsweise ≤5 %, beträgt.

13. Folie nach einem der Ansprüche 1 bis 12, **dadurch gekennzeichnet, dass** die Durchstoßfestigkeit der erfindungsgemäßen Folie beträgt min. 0,35N pro $\mu$m Foliendicke beträgt.

14. Folie nach einem der Ansprüche 1 bis 13, **dadurch gekennzeichnet, dass** die Temperatur in der Thermofixierung ($T_F$) größer ist als die Temperatur in der Querverstreckung ($T_Q$) und die Temperatur in der Querverstreckung ($T_Q$) wiederum größer ist als die Temperatur in der Längsverstreckung ($T_L$).

15. Verfahren zur Herstellung einer Folie definiert in den Ansprüchen 1 bis 14 umfassend die Maßnahmen:

(i) Extrusion einer einschichtigen oder mehrschichtigen porösen Polypropylenfolie bei welchem Propylenpolymer und $\beta$-Nukleierungsmittel in einem Extruder aufgeschmolzen und durch eine Flachdüse auf eine Abzugswalze extrudiert werden,
(ii) anschließend der extrudierte Schmelzefilm unter Ausbildung von $\beta$-Kristalliten abgekühlt und verfestigt wird,
(iii) anschließend diese Folie in Längsrichtung und danach in Querrichtung verstreckt wird, und
(iv) eine thermischen Behandlung (Thermofixierung) durchgeführt wird, bei der das Produkt aus Temperatur während der Thermofixierung in Celsius ($T_F$) und Dauer der Thermofixierung in Sekunden ($t_F$) mindestens 3000°Cs beträgt ($T_F$ x $t_F \geq$ 3000°Cs).

16. Verwendung einer Folie nach einem der Ansprüche 1 bis 14 als Separator in Lithium-, Lithiumionen-, Lithium-Polymer-, Erdalkali-Batterien oder Doppelschichtkondensatoren.

17. Hochenergie-oder Hochleistungssystem, insbesondere Lithium-, Lithiumionen-, Lithium-Polymer-, Erdalkali-Batterien oder Doppelschichtkondensatoren, enthaltend eine Folie nach einem der Ansprüche 1 bis 14.

**Claims**

1. A biaxially oriented, single-layer or multi-layer porous film, comprising at least one porous layer, and this layer contains at least one propylene polymer, wherein the propylene polymer is a propylene homopolymer and/or a propylene block copolymer, and wherein

(i) the porosity of the porous film is 30% to 80%, and
(ii) the permeability of the porous film is ≤800 s (Gurley value), and
(iii) the porous film has an E modulus of ≥300 N/mm$^2$ in the longitudinal direction, and
(iv) an E modulus of ≥300 N/mm$^2$ in the transverse direction, and
(v) a density of at least 0.35 g/cm$^3$ and
(vi) a static puncture resistance of at least 0.3 N/$\mu$m and
(vii) a thickness of 10 to 150 $\mu$m (each measured as described in the description), and

wherein the film is extruded by a method comprising the measures:

(i) extrusion of a of a porous, single-layer or multi-layer polypropylene film, in which propylene polymer and $\beta$-nucleating agent are melted in an extruder and extruded through a flat-sheet die onto a draw-off roller,
(ii) then the extruded melt film is cooled and solidified, forming $\beta$-crystallites,
(iii) this film is then drawn in the longitudinal direction and next in the transverse direction, and
(iv) a thermal treatment (thermosetting) is carried out, in which the product of the temperature in centigrade ($T_F$) during the thermosetting, and the duration of the thermosetting in seconds ($t_F$) amounts to at least 3000°Cs, preferably ≥3500°Cs ($T_F$ x $t_F$ ≥3000°Cs), wherein the maximum temperature during thermosetting ($T_F$) is ≤160°C, and thermal treatment (thermosetting) of the film covers a period of time of ≥25 s and a temperature in the range of 100°C to 160°C.

2. The film according to claim 1, **characterized in that**
the porosity is created by converting $\beta$-crystalline polypropylene in drawing the film, wherein at least one $\beta$-nucleating agent is present in the film.

**3.** The film according to any one of claim 2,
**characterized in that**
the β-nucleating agent is a calcium salt of pimelic acid and/or suberic acid and/or a nano-scale iron oxide.

**4.** The film according to any one of claims 2 or 3,
**characterized in that**
the film contains 50 to 85 wt% propylene homopolymer, 15 to 50 wt% propylene block copolymer and 50 to 10,000 ppm β-nucleating agent.

**5.** The film according to any one of claims 1 to 4,
**characterized in that**
the density of the film is in a range of 0.35 to 0.6 g/cm$^3$.

**6.** The film according to any one of claims 1 to 5,
**characterized in that**
the film has a thickness of 15 to 100 μm.

**7.** The film according to any one of claims 1 to 6,
**characterized in that**
the propylene polymer has been produced by using metallocene catalysts.

**8.** The film according to any one of claims 1 to 7,
**characterized in that**
the permeability of the porous film amounts to 20 - ≤800 s (Gurley value).

**9.** The film according to any one of claims 1 to 8,
**characterized in that**
the E modulus of the film amounts to 300 to 3500 N/mm$^2$ in the longitudinal direction, preferably 400 to 2000 N/mm$^2$, in particular 600 to 1800 N/mm$^2$.

**10.** The film according to any one of claims 1 to 9,
**characterized in that**
the E modulus of the film in the transverse direction amounts to 400 to 3000 N/mm$^2$, preferably 500 to 2500 N/mm$^2$, in particular 600 to 2200 N/mm$^2$.

**11.** The film according to any one of claims 1 to 10,
**characterized in that**
the shrinkage in the longitudinal direction amounts to ≤10%, preferably ≤5% at 100°C and one hour.

**12.** The film according to any one of claims 1 to 11,
**characterized in that**
the shrinkage in transverse direction amounts to ≤10%, preferably ≤5% at 100°C and one hour.

**13.** The film according to any one of claims 1 to 12,
**characterized in that**
the puncture resistance of the film according to the invention amounts to at least 0.35N per μm of film thickness.

**14.** The film according to any one of claims 1 to 13,
**characterized in that**
the temperature in thermosetting ($T_F$) is higher than the temperature in transverse drawing ($T_Q$), and the temperature in transverse drawing ($T_Q$) is in turn higher than the temperature in longitudinal drawing ($T_L$).

**15.** A method for producing a film as defined in claims 1 to 14,
comprising the measures:

(i) extrusion of a single-layer or multi-layer porous polypropylene film, in which propylene polymer and β-nucleating agent are melted in an extruder and extruded through a flat-sheet die onto a draw-off roller,
(ii) then the extruded melt film is cooled and solidified, forming β-crystallites,

(iii) this film is then drawn in the longitudinal direction and next in the transverse direction, and

(iv) a thermal treatment (thermosetting) is carried out, in which the product of the temperature during thermosetting in centigrade ($T_F$) and the duration of the thermosetting in seconds ($t_F$) amounts to at least 3000°Cs ($T_F$ x $t_F \geq 3000$°Cs).

16. Use of a film according to any one of claims 1 to 14 as a separator in lithium batteries, lithium ion batteries, lithium polymer batteries, alkaline batteries or double-layer capacitors.

17. A high-energy or high-performance system, in particular lithium batteries, lithium ion batteries, lithium polymer batteries, alkaline batteries or double-layer capacitors, containing a film according to any one of claims 1 to 14.

**Revendications**

1. Feuille poreuse mono- ou multicouche à orientation biaxiale, laquelle comprend au moins une couche poreuse, et cette couche comprenant au moins un polymère de propylène, ledit polymère de propylène étant un homopolymère de propylène et/ou un polymère de propylène à blocs, et

(i) la porosité de la feuille poreuse étant comprise entre 30 % et 80 %, et

(ii) la perméabilité de la feuille poreuse étant $\leq$ 800 s (indice de Gurley), tout en présentant

(iii) un module d'élasticité longitudinale $\geq$ 300 N/mm$^2$ et

(iv) un module d'élasticité transversale $\geq$ 300 N/mm$^2$ et

(v) une densité supérieure ou égale à 0,35 g/cm$^3$ et

(vi) une résistance à la perforation statique supérieure ou égale à 0,3 N/$\mu$m et

(vii) une épaisseur comprise entre 10 et 150 $\mu$m (chacune des mesures étant conforme aux indications correspondantes dans la description), et

ladite feuille pouvant être obtenue par un procédé comprenant les actions suivantes :

(i) extrusion d'une feuille poreuse en polypropylène mono- ou multicouche, réalisée en faisant fondre du polymère de propylène et de l'agent de nucléation $\beta$ dans une extrudeuse puis en les extrudant à travers une filière plate sur un cylindre d'appel,

(ii) ensuite, refroidissement et solidification du film de matière fondue issu de l'extrusion, en formant des cristallites $\beta$,

(iii) ensuite, orientation de cette feuille dans le sens longitudinal puis dans le sens transversal, et

(iv) réalisation d'un traitement thermique (thermofixation), le produit de la température en Celsius ($T_F$) pendant la thermofixation et de la durée de thermofixation en secondes ($t_F$) étant supérieur ou égal à 3 000 °Cs, de préférence $\geq$ 3 500 °Cs, ($T_F$ x $t_F \geq$ 3 000°Cs),

la température maximale pendant la thermofixation ($T_F$) étant $\leq$ 160°C et le traitement thermique (thermofixation) de ladite feuille comprenant une durée de $\geq$ 25 s et une température comprise entre 100 et 160 °C.

2. Feuille selon la revendication 1, **caractérisée en ce que** la porosité est générée par transformation de polypropylène $\beta$-cristallin lors de l'orientation de la feuille, ladite feuille comportant au moins un agent de nucléation $\beta$.

3. Feuille selon la revendication 2, **caractérisée en ce que** ledit agent de nucléation $\beta$ est un sel de calcium de l'acide pimélique et/ou de l'acide subérique et/ou un oxyde de fer à échelle nanométrique.

4. Feuille selon l'une des revendications 2 ou 3, **caractérisée en ce que** la feuille contient 50 à 85 % en poids d'homopolymère de propylène, 15 à 50 % en poids de copolymère de propylène à blocs et 50 à 10 000 ppm d'agent de nucléation $\beta$.

5. Feuille selon l'une des revendications 1 à 4, **caractérisée en ce que** la densité de ladite feuille est comprise entre 0,35 et 0,6 g/cm$^3$.

6. Feuille selon l'une des revendications 1 à 5, **caractérisée en ce que** ladite feuille présente une épaisseur comprise entre 15 et 100 $\mu$m.

7. Feuille selon l'une des revendications 1 à 6, **caractérisée en ce que** les polymères de propylène n'ont pas été fabriqués en mettant en oeuvre des catalyseurs de type métallocène.

8. Feuille selon l'une des revendications 1 à 7, **caractérisée en ce que** ladite feuille poreuse présente une perméabilité comprise entre 20 et $\leq$ 800 s (indice de Gurley).

9. Feuille selon l'une des revendications 1 à 8, **caractérisée en ce que** le module d'élasticité longitudinale de ladite feuille est compris entre 300 et 3 500 N/mm$^2$, de préférence entre 400 et 2 000 N/mm$^2$, notamment entre 600 bis 1 800 N/mm$^2$.

10. Feuille selon l'une des revendications 1 à 9, **caractérisée en ce que** le module d'élasticité transversale de ladite feuille est compris entre 400 et 3 000 N/mm$^2$, de préférence entre 500 et 2 500 N/mm$^2$, notamment entre 600 bis 2 200 N/mm$^2$.

11. Feuille selon l'une des revendications 1 à 10, **caractérisée en ce qu'**elle subit, à 100 °C pendant 1 heure, dans le sens longitudinal un retrait $\leq$ 10 %, de préférence $\leq$ 5 %.

12. Feuille selon l'une des revendications 1 à 11, **caractérisée en ce qu'**elle subit, à 100 °C pendant 1 heure, dans le sens transversal un retrait $\leq$ 10 %, de préférence $\leq$ 5 %.

13. Feuille selon l'une des revendications 1 à 12, **caractérisée en ce que** la feuille selon l'invention présente, par $\mu$m d'épaisseur de feuille, une résistance à la perforation supérieure ou égale à 0,35 N.

14. Feuille selon l'une des revendications 1 à 13, **caractérisée en ce que** la température lors de la thermofixation ($T_F$) est supérieure à la température lors de l'orientation transversale ($T_Q$) et que la température lors de l'orientation transversale ($T_Q$) étant à son tour supérieure à la température lors de l'orientation longitudinale ($T_L$).

15. Procédé de fabrication d'une feuille telle que définie dans les revendications 1 à 14, comprenant les actions suivantes :

(i) extrusion d'une feuille poreuse en polypropylène mono- ou multicouche, réalisée en faisant fondre du polymère de propylène et de l'agent de nucléation $\beta$ dans une extrudeuse puis en les extrudant à travers une filière plate sur un cylindre d'appel,
(ii) ensuite, refroidissement et solidification du film de matière fondue issu de l'extrusion, en formant des cristallites $\beta$,
(iii) ensuite, orientation de cette feuille dans le sens longitudinal puis dans le sens transversal, et
(iv) réalisation d'un traitement thermique (thermofixation), le produit de la température en Celsius ($T_F$) pendant la thermofixation et de la durée de thermofixation en secondes ($t_F$) étant supérieur ou égal à 3 000 °Cs ($T_F$ x $t_F \geq$ 3 000 °Cs),

16. Utilisation d'une feuille selon l'une des revendications 1 à 14 en tant que séparateur dans des batteries de type lithium, lithium-ion, lithium-polymère, alcalino-terreux ou dans des condensateur à double couche.

17. Système à haut niveau d'énergie ou à haute performance, s'agissant notamment de batteries de type lithium, lithium-ion, lithium-polymère, alcalino-terreux ou de condensateurs à double couche, contenant une feuille selon l'une des revendications 1 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2381510 A
- WO 2010145770 A
- WO 2010066390 A
- WO 2010066389 A
- WO 2011134626 A
- EP 1369221 A
- WO 2011076805 A
- WO 2011076375 A
- EP 2444453 A

- EP 0967671 A
- US 6921608 B
- EP 0951080 A
- US 5683634 A
- DE 3610644
- DE 4420989
- EP 0557721 A
- WO 2011047797 A1